# EUROPÄISCHE PATENTSCHRIFT

(11) **EP 3 934 945 B1**
(45) Veröffentlichungstag und Bekanntmachung des Hinweises auf die Patenterteilung: **20.12.2023**
(21) Anmeldenummer: 20705141.8
(22) Anmeldetag: 04.02.2020
(51) Int. Cl.: B60R 25/24, G07C 9/00

(54) **VERFAHREN ZUM BETREIBEN EINES SCHLIESSSYSTEMS EINES FAHRZEUGS MIT SEPARATER INNENRAUMERFASSUNG UND AUSSENRAUMERFASSUNG EINER SCHLUESSELEINRICHTUNG SOWIE SCHLIESSSYSTEM**
METHOD FOR OPERATING A LOCKING SYSTEM IN A VEHICLE WITH SEPARATE INTERIOR AND EXTERIOR KEY DEVICE DETECTING AND LOCKING SYSTEM
PROCEDE POUR FAIRE FONCTIONNER UN SYSTEME DE FERMETURE D'UN VEHICULE COMPRENANT LA DETECTION D'UN SYSTEME DE CLE SEPAREE POUR L'HABITACLE ET POUR L'ESPACE EXTERIEUR AINSI QUE SYSTEME DE CLE

(30) Priorität: 06.03.2019 DE 102019203029
(43) Veröffentlichungstag der Anmeldung: 12.01.2022
(73) Patentinhaber: Volkswagen Aktiengesellschaft, 38440 Wolfsburg (DE)
(72) Erfinder: BRÜCKNER, Claus-Peter, 38104 Braunschweig (DE)
(74) Vertreter: 2SPL Patentanwälte PartG mbB
(86) Internationale Anmeldenummer: PCT/EP2020/052694
(87) Internationale Veröffentlichungsnummer: WO 2020/177962

(56) Entgegenhaltungen:
- WO-A1-2008/135216
- WO-A1-2018/137923
- DE-A1- 10 235 361
- FR-A1- 2 915 839
- US-A1- 2003 193 388
- US-A1- 2018 234 797

## Beschreibung

Die vorliegende Erfindung betrifft ein Verfahren zum Betreiben eines Schließsystems eines Fahrzeugs, bei welchem mit zumindest einem Innenraum-Transceiver, welcher in einem Innenraum des Fahrzeugs angeordnet ist, und mit zumindest einem Außenraum-Transceiver, welcher außerhalb des Innenraums des Fahrzeugs angeordnet ist, jeweils Laufzeitmessungen durchgeführt werden, anhand der Laufzeitmessungen eine relative Lage einer Schlüsseleinrichtung zu dem Fahrzeug bestimmt wird und eine Betriebsfunktion des Schließsystems in Abhängigkeit von der bestimmten relativen Lage der Schlüsseleinrichtung zu dem Fahrzeug durchgeführt wird, wobei die Betriebsfunktion ein Verriegeln des Fahrzeugs, ein Entriegeln des Fahrzeugs und/oder ein Starten eines Antriebsmotors des Fahrzeugs ist. Zudem betrifft die vorliegende Erfindung ein Schließsystem sowie ein Fahrzeug.

Aus dem Stand der Technik sind Schließsysteme für Fahrzeuge bekannt. Diese Schließsysteme umfassen eine Schlüsseleinrichtung, die beispielsweise als Funkschlüssel oder als mobiles Gerät ausgebildet sein kann. Mit dem Schließsystem kann das Fahrzeug beziehungsweise die Türen des Fahrzeugs verriegelt und entriegelt werden. Das Schließsystem dient auch dazu, einen Antriebsmotor des Fahrzeugs zu starten. Des Weiteren sind aus dem Stand der Technik Schließsysteme bekannt, welche die Schlüsseleinrichtung orten können. Dabei werden im Außenbereich des Fahrzeugs für die Ortung der Schlüsseleinrichtung Außenraum-Transceiver verbaut. Im Innenraum des Fahrzeugs werden zudem weitere Innenraum-Transceiver verbaut, um die Schlüsseleinrichtung im Innenraum orten zu können. Dabei werden zwischen der Schlüsseleinrichtung und allen am beziehungsweise im Fahrzeug verbauten Transceivern jeweils Laufzeiten gemessen. Aus den jeweiligen Laufzeiten kann dann die Position der Schlüsseleinrichtung beziehungsweise die relative Lage zwischen der Schlüsseleinrichtung und dem Fahrzeug bestimmt werden.

Bei der Ortung wird davon ausgegangen, dass die jeweiligen Laufzeiten den Abstand beziehungsweise die kürzeste Verbindung zwischen der Schlüsseleinrichtung und dem Transceiver beschreiben. In bestimmten Positionen der Schlüsseleinrichtung im Innenraum des Fahrzeugs besteht zwischen der Schlüsseleinrichtung und den Transceivern keine direkte Funkmessstrecke, da beispielsweise bei den Außenraum-Transceivern das Funksignal durch die Karosserie des Fahrzeugs und bei den Innenraum-Transceivern das Funksignal durch Sitzlehnen oder Personen im Fahrzeug unterbrochen wird. Dies kann zu Reflexionen des Signals führen. In diesem Fall können falsche Distanzmesswerte errechnet werden, wenn je nach Umgebung des Fahrzeugs von Gegenständen reflektierte Signale mit längeren Signallaufzeiten genutzt werden.

Gemäß dem Stand der Technik werden für die Ortung der Schlüsseleinrichtung die Laufzeiten aller Innenraum-Transceiver und aller Außenraum-Transceiver in das Bewertungsverfahren beziehungsweise einen entsprechenden Optimierungsalgorithmus einbezogen, um die Schlüsseleinrichtung möglichst genau orten zu können. Tests haben aber ergeben, dass in reflektierenden Fahrzeugumgebungen, beispielsweise in engen Parkhäusern oder Garagen, bei der Ortung im Innenraum falsche Distanzmesswerte der Außen-Transceiver dazu führen können, dass das Ergebnis der Ortung beschreibt, dass sich die Schlüsseleinrichtung außerhalb des Fahrzeugs befindet, obwohl sich die Schlüsseleinrichtung real im Innenraum befindet. Dies kann bei einem sogenannten Passive Entry System dazu führen, dass die Schlüsseleinrichtung beziehungsweise der Fahrzeugschlüssel ungewollt im Innenraum des Fahrzeugs eingeschlossen wird oder das Fahrzeug nicht gestartet werden kann.

Die WO 2018/137923 A1 betrifft ein Verfahren zum Verifizieren eines vorgegebenen räumlichen Maximalabstands eines Funkschlüssels bezüglich eines Kraftfahrzeugs. Es wird zur Reduktion des Energiebedarfs im Funkschlüssel für die Laufzeitmessungen eine Entscheidung getroffen, mit welchen der im Kraftfahrzeug verbauten Transceiver aktuell die Laufzeitmessung zum Funkschlüssel durchgeführt werden soll. Dabei wird nicht jeder Transceiver genutzt, sondern nur eine Auswahl aus Transceivern, die dahingehend ausgewählt werden, dass sie abhängig von der Zone, in welcher der Funkschlüssel lokalisiert wurde, ausgewählt werden. Hierdurch soll sichergestellt werden, dass sich eine freie Sicht auf den Funkschlüssel für das jeweilige elektromagnetische Funksignal des Transceivers ergibt.

Wurde zum Beispiel ein Funkschlüssel im Innenraum lokalisiert, so kann die Laufzeitmessung vom/zum Schlüssel mit einem oder zwei Innenraum-Transceivern durchgeführt werden. Die Außenraum-Transceiver werden dann nicht benötigt. Wurde der Funkschlüssel im Außenraum zum Beispiel links lokalisiert, das heißt linke Zone, wird die Laufzeitmessung vom/zum Schlüssel mit den beiden links am Kraftfahrzeug angebrachten Transceivern durchgeführt. Die Innenraum-Transceiver und die Außenraum-Transceiver an der gegenüberliegenden Fahrzeugseite des Kraftfahrzeugs werden dann nicht benötigt.

Demnach werden bei der WO 2018/137923 A1 die Transceiver in Abhängigkeit von einem räumlichen Bereich ausgewählt, in welchem der Funkschlüssel lokalisiert wurde. Diese Druckschrift wurde zur Formulierung des Oberbegriffs von Patentanspruch 1 herangezogen.

Es ist Aufgabe der vorliegenden Erfindung, eine Lösung aufzuzeigen, wie eine Ortung einer Schlüsseleinrichtung verbessert werden kann und damit ein Betrieb eines Schließsystems zuverlässiger durchgeführt werden kann.

Diese Aufgabe wird erfindungsgemäß durch ein Verfahren, durch ein Schließsystem sowie durch ein Fahrzeug mit den Merkmalen gemäß den unabhängigen Ansprüchen gelöst. Vorteilhafte Weiterbildungen der Erfindung sind in den abhängigen Ansprüchen angegeben.

Ein erfindungsgemäßes Verfahren dient zum Betreiben eines Schließsystems eines Fahrzeugs. Bei dem Verfahren werden mit zumindest einem Innenraum-Transceiver, welcher in einem Innenraum des Fahrzeugs angeordnet ist, und mit zumindest einem Außenraum-Transceiver, welcher außerhalb des Innenraums des Fahrzeugs angeordnet ist, jeweils Laufzeitmessungen durchgeführt. Anhand der Laufzeitmessungen wird eine relative Lage einer Schlüsseleinrichtung zu dem Fahrzeug bestimmt. Des Weiteren wird eine Betriebsfunktion des Schließsystems in Abhängigkeit von der bestimmten relativen Lage der Schlüsseleinrichtung zu dem Fahrzeug durchgeführt, wobei die Betriebsfunktion ein Verriegeln des Fahrzeugs, ein Entriegeln des Fahrzeugs und/oder ein Starten eines Antriebsmotors des Fahrzeugs ist. Dabei ist vorgesehen, dass eine Innenraumortung, bei welcher die relative Lage der Schlüsseleinrichtung zu dem Fahrzeug nur anhand der Laufzeitmessung mit dem zumindest einen Innenraum-Transceiver bestimmt wird, und eine Außenraumortung, bei welcher die relative Lage nur anhand der Laufzeitmessung mit dem zumindest einen Außenraum-Transceiver bestimmt wird, separat durchgeführt werden. Außerdem wird in Abhängigkeit von der Betriebsfunktion die während der Innenraumortung und/oder der Außenraumortung bestimmte relative Lage ausgewählt. Die während der Innenraumortung durchgeführten Laufzeitmessungen und/oder die während der Außenraumortung durchgeführten Laufzeitmessungen werden plausibilisiert, wobei bei der Plausibilisierung unter Heranziehen der bekannten Einbaupositionen der Transceiver überprüft wird, ob während der Laufzeitmessung ein Signal des zumindest einen Innenraum-Transceivers und/oder des zumindest einen Außenraum-Transceivers reflektiert wurde, indem überprüft wird, ob nicht plausibel lange Signallaufzeiten aufgetreten sind.

Mithilfe des Verfahrens soll das Schließsystem des Fahrzeugs betrieben werden. Dieses Schließsystem dient zum Verriegeln und Entriegeln der Türen und/oder des Kofferraums des Fahrzeugs. Des Weiteren dient das Schließsystem zum Starten und/oder Stoppen eines Antriebsmotors des Fahrzeugs. Das Schließsystem umfasst die Schlüsseleinrichtung, welche als Funkschlüssel ausgebildet sein kann. Es kann auch vorgesehen sein, dass die Schlüsseleinrichtung durch ein mobiles Gerät, beispielsweise ein Smartphone oder dergleichen, bereitgestellt wird. Die Schlüsseleinrichtung kann von dem Nutzer oder Fahrer des Fahrzeugs getragen werden. Die Schlüsseleinrichtung kann zudem entsprechende Bedienelemente aufweisen oder diese bereitstellen. Durch eine Betätigung dieser Bedienelemente können Betriebsfunktionen des Schließsystems, insbesondere das Verriegeln und Entriegeln, angefordert werden.

Zudem umfasst das Schießsystem den zumindest einen Innenraum-Transceiver, welcher in dem Innenraum des Fahrzeugs angeordnet ist. Unter dem Begriff Innenraum wird vorliegend die Fahrgastzelle und auch ein Kofferraum beziehungsweise Stauraum des Fahrzeugs verstanden. Dabei können auch mehrere Innenraum-Transceiver in dem Innenraum des Fahrzeugs angeordnet sein. Die Außenraum-Transceiver können außerhalb des Innenraums angeordnet sein. Beispielsweise können die Außenraum-Transceiver an einer Außenhülle des Fahrzeugs angeordnet sein. Die Außenraum-Transceiver können an der Karosserie und/oder einem Außenbauteil angeordnet sein. Insbesondere können die Außenraum-Transceiver an oder verdeckt hinter den Stoßfängern des Fahrzeugs angeordnet sein. Auch hier ist es bevorzugt vorgesehen, dass das Schließsystem eine Mehrzahl von Außenraum-Transceivern aufweist. Diese können beispielsweise an den jeweiligen äußeren Ecken des Fahrzeugs angeordnet sein.

Zwischen den jeweiligen Transceivern, also die Innenraum-Transceiver und Außenraum-Transceiver, und der Schlüsseleinrichtung kann drahtlos beziehungsweise über Funk ein Signal ausgetauscht werden. Die Transceiver können auch als Funkmesstransceiver bezeichnet werden. Dabei wird die jeweilige Laufzeit (Time of Flight) für die Übertragung des Signals zwischen der Schlüsseleinrichtung und dem Transceiver bestimmt. Beispielsweise kann zur Übertragung des Signals die Ultra-Breitband-Technologie genutzt werden. Anhand der bekannten Ausbreitungsgeschwindigkeit des Signals kann dann auf den Abstand zwischen der Schlüsseleinrichtung und den jeweiligen Transceivern rückgeschlossen werden. Die jeweiligen Laufzeiten beziehungsweise Abstände können mit einem Steuergerät oder einer Recheneinrichtung des Schließsystems bestimmt werden. Auf Grundlage der jeweiligen Abstände und der bekannten Einbaupositionen der Transceiver kann dann die relative Lage zwischen der Schlüsseleinrichtung und dem Fahrzeug beziehungsweise einem Bezugspunkt des Fahrzeugs bestimmt werden. Das Durchführen der jeweiligen Betriebsfunktionen des Schließsystems wird in Abhängigkeit von der relativen Lage zwischen der Schlüsseleinrichtung und dem Fahrzeug bestimmt. Es kann der Fall sein, dass eine Betriebsfunktion des Schließsystems angefordert wird. Dies kann durch eine entsprechende Bedieneingabe des Nutzers beziehungsweise Fahrers erfolgen. Diese Bedieneingabe kann an einem Bedienelement der Schlüsseleinrichtung oder einem Bedienelement im Innenraum des Fahrzeugs durchgeführt werden. Es kann auch vorgesehen sein, dass die Betriebsfunktion automatisch angefordert wird. Nach der Anforderung der Betriebsfunktion kann mittels des Steuergeräts überprüft werden, ob diese Betriebsfunktion in Abhängigkeit von der relativen Lage zwischen der Schlüsseleinrichtung und dem Fahrzeug durchgeführt werden kann. Beispielsweise kann das Verriegeln der Türen nur durchgeführt werden, wenn sich die Schlüsseleinrichtung außerhalb des Fahrzeugs befindet. Falls sich gleichzeitig weitere Schlüsseleinrichtungen in dem Fahrzeug befinden, ist es erforderlich, diese zu deaktivieren. Ferner kann das Starten des Antriebsmotors nur durchgeführt werden, wenn sich der Schlüssel im Innenraum des Fahrzeugs befindet.

Gemäß einem wesentlichen Aspekt der Erfindung ist vorgesehen, dass für die Ortung der Schlüsseleinrichtung separat eine Innenraumortung und eine Außenraumortung durchgeführt werden. Bei der Innenraumortung werden für die Bestimmung der relativen Lage zwischen dem Fahrzeug und der Schlüsseleinrichtung nur die Laufzeitmessungen der Innenraum-Transceiver herangezogen. Bei der Außenraumortung werden für die Bestimmung der relativen Lage zwischen dem Fahrzeug und der Schlüsseleinrichtung nur die Laufzeitmessungen der Außenraum-Transceiver herangezogen. Bei einem Messzyklus wird also einerseits mit den Innenraum-Transceivern die relative Lage bestimmt und andererseits wird unabhängig davon mit den Außenraum-Transceivern die relative Lage bestimmt. Es ist also im Gegensatz zum Stand der Technik insbesondere nicht vorgesehen, dass die Laufzeitmessungen von allen vorhandenen Transceivern gleichzeitig zur Bestimmung der relativen Lage herangezogen werden. In Abhängigkeit von der angeforderten Betriebsfunktion wird dann entschieden, ob die Daten der Innenraumortung und/oder die Daten der Außenraumortung für die Bestimmung der relativen Lage herangezogen werden. Die Auswahl der Daten der Innenraumortung und/oder der Daten der Außenraumortung für die jeweiligen Betriebsfunktionen, also das Verriegeln, das Entriegeln, das Starten des Motors und das Stoppen des Motors, können in einer Zuordnungsvorschrift oder Tabelle hinterlegt sein. Es kann auch vorgesehen sein, dass die Ergebnisse der Innenraumortung und/oder der Außenraumortung in Abhängigkeit von der Betriebsfunktion unterschiedlich ausgewertet werden.

Insbesondere ist vorgesehen, dass die Ortung der Schlüsseleinrichtung fortlaufend mit allen Transceivern durchgeführt wird. Die Bewertung erfolgt dabei insbesondere nicht nur, wenn die Betriebsfunktion angefordert wurde. Die jeweiligen Laufzeitmessungen mit den Transceivern können parallel oder quasiparallel durchgeführt werden und entsprechend bewertet werden. Für die unterschiedlichen Betriebsfunktionen werden die Auswertungen also bevorzugt parallel durchgeführt. Somit können die Ortungsergebnisse vorgehalten werden und können sofort zur Entscheidung genutzt werden, ob die angeforderte Betriebsfunktion ausgeführt werden darf. Insbesondere ist vorgesehen, dass nur die notwendigen Transceiver in die Auswertung einbezogen werden.

Der vorliegenden Erfindung liegt die Erkenntnis zugrunde, dass in Abhängigkeit von der Position der Schlüsseleinrichtung bei bestimmten Transceivern Messfehler auftreten können. Beispielsweise kann es der Fall sein, dass bei den Außenraum-Transceivern Messfehler infolge von Reflexionen auftreten, wenn sich die Schlüsseleinrichtung im Innenraum des Fahrzeugs befindet. In Abhängigkeit von der angeforderten Betriebsfunktion ist es erforderlich, die Position der Schlüsseleinrichtung im Innenraum oder außerhalb des Fahrzeugs zuverlässig zu erkennen. Hierbei wird berücksichtigt, mit welchen Transceivern die Position der Schlüsseleinrichtung für die Betriebsfunktion am zuverlässigsten erkannt werden kann. Anhand der Innenraumortung und der Außenraumortung können vorbestimmte Bewertungsalgorithmen durchgeführt werden, mit denen die relative Lage bestimmt werden kann. Je nach Ortungsbereich (Innenraum oder außerhalb des Fahrzeugs) können also unterschiedliche Bewertungsverfahren durchgeführt werden. Insgesamt ermöglicht dies eine verbesserte Ortung der Schlüsseleinrichtung und damit einen zuverlässigeren Betrieb des Schließsystems.

In einer Ausführungsform wird das Verriegeln nur in Abhängigkeit von der während der Innenraumortung bestimmten relativen Lage durchgeführt, falls die Betriebsfunktion das Verriegeln des Fahrzeugs ist. Das Verriegeln des Fahrzeugs darf nur erfolgen, falls sichergestellt werden kann, dass sich die Schlüsseleinrichtung nicht in dem Innenraum des Fahrzeugs befindet. In diesem Fall können nur die Innenraum-Transceiver für die Distanzmessung herangezogen werden. Hier wird die Schlüsseleinrichtung gezielt im Innenraum des Fahrzeugs gesucht, um ein Einschließen der Schlüsseleinrichtung im Innenraum des Fahrzeugs zu verhindern. In diesem Fall wird die Außenraumortung nicht verwendet, da bei den Außenraum-Transceivern Messfehler infolge von Reflexionen auftreten können. Somit kann beispielsweise verhindert werden, dass die Position der Schlüsseleinrichtung fehlerhaft als außerhalb des Fahrzeugs erkannt wird. Dies kann beispielsweise der Fall sein, wenn sich die Schlüsseleinrichtung in einer Jackentasche einer Jacke befindet und die Jacke von dem Nutzer oder Fahrer vor dem Verriegeln in dem Innenraum abgelegt wird.

In einer weiteren Ausführungsform wird das Entriegeln nur in Abhängigkeit von der während der Außenraumortung bestimmten relativen Lage durchgeführt, falls die Betriebsfunktion das Entriegeln des Fahrzeugs ist. Ganz allgemein kann gelten, dass wenn die Position der Schlüsseleinrichtung außerhalb des Fahrzeugs bestimmt werden soll, nur die Daten der Außenraumortung herangezogen werden. Wenn sich die Schlüsseleinrichtung außerhalb des Fahrzeugs befindet, können Messfehler bei den Innenraum-Transceivern auftreten. Diese Messfehler können durch Reflexionen und/oder Unterbrechungen der Signale der Innenraum-Transceivern begründet sein. Damit kann die Position der Schlüsseleinrichtung außerhalb des Fahrzeugs genau bestimmt werden.

In einer weiteren Ausführungsform wird die während der Innenraumortung bestimmte relative Lage anhand der während der Außenraumortung bestimmten relativen Lage überprüft, falls die Betriebsfunktion das Starten des Antriebsmotors des Fahrzeugs ist. Falls der Antriebsmotor des Fahrzeugs gestartet werden soll beziehungsweise der Start des Antriebsmotors freigegeben werden soll, ist es erforderlich und auch gesetzlich vorgeschrieben, dass sich der Fahrer beziehungsweise Nutzer mit der Schlüsseleinrichtung im Innenraum des Fahrzeugs befinden muss. Da hier überprüft wird, ob sich die Schlüsseleinrichtung im Fahrzeug befindet, werden zunächst nur die Daten der Innenraumortung genutzt. Zudem kann anhand der Außenortung beziehungsweise der Messungen der Außen-Transceiver überprüft beziehungsweise bestätigt werden, dass sich die Schlüsseleinrichtung tatsächlich im Innenraum befindet. Dies kann parallel zu der Innenraumüberwachung erfolgen oder in einem zusätzlichen Auswertealgorithmus überprüft werden. Durch diese zweistufige Überprüfung kann die Sicherheit garantiert werden und die gesetzlichen Anforderungen erfüllt werden. Somit kann beispielsweise eine Situation ausgeschlossen werden, bei der der Antriebsmotor ungewollt gestartet wird. Dies kann beispielsweise der Fall sein, wenn sich der Nutzer oder Fahrer außerhalb des Fahrzeugs aber in der Nähe des Fahrzeugs befindet und sein Kind im Fahrzeug den Start-Knopf betätigt. Wenn hier die Position beziehungsweise relative Lage der Schlüsseleinrichtung falsch als im Innenraum erkannt wird, könnte dies im schlimmsten Fall dazu führen, dass der Motor gestartet wird und sich das Fahrzeug bewegt.

Für unterschiedliche Betriebsfunktionen können jeweilige Bewertungsalgorithmen vorgesehen sein, mit denen die Laufzeitmessungen der jeweiligen Transceiver ausgewertet werden. Wie zuvor erläutert, kann bei der Betriebsfunktion Verriegeln nur die Innenraumortung genutzt werden. In diesem Fall können nur die Laufzeitmessungen der Innenraum-Transceiver verwendet werden. Hier ist es insbesondere vorgesehen, dass mit den Innenraum-Transceivern nur der Innenraum des Fahrzeugs überwacht wird. Bei der Betriebsfunktion Motorstart kann es zudem vorgesehen sein, dass hier ebenfalls der Innenraum des Fahrzeugs auf das Vorhandensein der Schlüsseleinrichtung hin überwacht wird. Zudem kann es bei dieser Betriebsfunktion vorgesehen sein, dass die Laufzeitmessungen der Außenraum-Transceiver verwendet werden, um den Innenraum des Fahrzeugs zu überwachen. Ferner kann es bei der Betriebsfunktion Motorstart vorgesehen sein, dass ein vorbestimmter Bereich außerhalb des Fahrzeugs beziehungsweise um das Fahrzeug herum überwacht wird. Der Bereich kann sich ausgehend von dem Fahrzeug bis zu einem vorbestimmten Abstand, beispielsweise 20 cm, zu der Außenhülle des Fahrzeugs erstrecken. Wenn in dem Innenraum oder in diesem Bereich die Schlüsseleinrichtung erkannt wird, kann der Start des Antriebsmotors freigegeben werden.

Weiterhin ist vorteilhaft, wenn die während der Innenraumortung durchgeführten Laufzeitmessungen und/oder die während der Außenraumortung durchgeführten Laufzeitmessungen plausibilisiert werden. Mit anderen Worten kann sowohl bei der Innenraumortung als auch bei der Außenraumortung eine Plausibilisierung durchgeführt werden. Insbesondere können die einzelnen Entfernungsmesswerte der Transceiver plausibilisiert werden, bevor sie in den Auswertungsalgorithmus einbezogen beziehungsweise verworfen werden. Beispielsweise kann zunächst die Plausibilisierung durchgeführt werden und danach der Bewertungsalgorithmus beziehungsweise Ortungsalgorithmus nur anhand der plausiblen Werte durchgeführt werden. Der Bewertungsalgorithmus kann auch auf künstlicher Intelligenz basiert sein. Für die jeweiligen Transceiver kann hierbei eine Plausibilisierung der Laufzeitmessung beziehungsweise Distanzmessung durchgeführt werden. Hierzu können die bekannten Einbaupositionen der Transceiver herangezogen werden. Insbesondere können die bekannten Abstände zwischen den am Fahrzeug verbauten Transceivern für die Plausibilisierung genutzt werden. Wenn die Schlüsseleinrichtung beispielsweise mit zwei Transceivern erfasst wird, kann überprüft werden, ob die Summe der jeweils mit den Transceivern bestimmten Abstände größer ist als ein Grenzwert, der anhand des Abstands zwischen den Transceivern bestimmt wird. Wenn sich die Schlüsseleinrichtung zwischen den Transceivern befinden sollte und die Summe der gemessenen Abstände größer ist als der Grenzwert, kann das Ergebnis beziehungsweise die Messung als falsch eingestuft werden. Ferner kann überprüft werden, ob sich die Ergebnisse, welche die Position beziehungsweise die relative Lage beschreiben, voneinander unterscheiden. Zudem kann es vorgesehen sein, dass Triangulationsberechnungen für die Plausibilisierung verwendet werden. Insbesondere kann die Triangulation genutzt werden, wenn die Schlüsseleinrichtung mit zumindest zwei Transceivern, insbesondere zwei Außenraum-Transceivern, erfasst wird. Insgesamt kann somit die Bestimmung der Position der Schlüsseleinrichtung zuverlässig durchgeführt werden.

Es wird bei der Plausibilisierung überprüft, ob während der Laufzeitmessung ein Signal des zumindest einen Innenraum-Transceivers und/oder des zumindest einen Außenraum-Transceivers reflektiert wurde. Wie bereits erläutert, sind die Einbaupositionen der jeweiligen Innenraum-Transceiver und der Außenraum-Transceiver bekannt. Auf Grundlage der bekannten Einbaupositionen beziehungsweise der Abstände der jeweiligen Transceiver untereinander sowie in Abhängigkeit von geometrischen Beziehungen, kann überprüft werden, ob das Signal gegebenenfalls reflektiert wurde. Falls das Signal reflektiert wurde, treten deutlich längere Signallaufzeiten auf, welche aber nicht plausibel sind. Durch die Plausibilisierung der Messergebnisse kann die Ortung der Schlüsseleinrichtung auf zuverlässige Weise durchgeführt werden.

Weiterhin ist vorteilhaft, wenn in Abhängigkeit von der Betriebsfunktion eine Priorisierung der während der Innenraumortung und/oder der Außenraumortung bestimmten relativen Lage durchgeführt wird. Bei der Priorisierung können die Ergebnisse der Innenraumortung und/oder der Außenraumortung entsprechend gewichtet werden. Somit kann ein Gewicht auf die während der Innenraumortung und/oder während der Außenraumortung bestimmten Messergebnisse gelegt werden. Wenn als Betriebsfunktion beispielsweise das Verriegeln des Fahrzeugs beziehungsweise der Türen des Fahrzeugs durchgeführt werden soll, kann das Ergebnis, dass sich die Schlüsseleinrichtung im Innenraum befindet, priorisiert beziehungsweise höher gewichtet werden. Somit kann erreicht werden, dass das Fahrzeug entsprechend verriegelt wird und somit der Komfort für den Fahrer beziehungsweise Nutzer steigt. Wenn aber als Betriebsfunktion der Antriebsmotor gestartet werden soll, kann die Priorisierung darauf gelegt werden, dass sich die Schlüsseleinrichtung außerhalb des Fahrzeugs befindet. Somit kann auch bei widersprüchlichen Messergebnissen garantiert werden, dass der Antriebsmotor nicht ungewollt gestartet wird.

In einer weiteren Ausgestaltung werden die Innenraumortung und die Außenraumortung fortlaufend durchgeführt und die jeweils hierbei bestimmte relative Lage wird gespeichert. Mit anderen Worten kann die Historie der Position beziehungsweise der relativen Lage der Schlüsseleinrichtung verfolgt werden. Somit kann quasi eine Trajektorie bestimmt werden, welche die Bewegung der Schlüsseleinrichtung in Abhängigkeit von der Zeit beschreibt. Damit kann auch erkannt werden, wenn die Schlüsseleinrichtung von dem Außenbereich in den Innenraum des Fahrzeugs bewegt wird. In gleicher Weise kann erkannt werden, wenn die Schlüsseleinrichtung von dem Innenraum nach außen bewegt wird. Es kann auch vorgesehen sein, dass ein entsprechender Übergangsbereich in dem Innenraum des Fahrzeugs und dem Außenbereich beziehungsweise der Umgebung definiert wird. In diesem definierten Übergangsbereich können beispielsweise sowohl die Ergebnisse der Innenraumortung als auch die Ergebnisse der Außenraumortung genutzt werden. Dies kann solange durchgeführt werden, bis eine stabile Bewertung vorliegt, dass sich der Schlüssel entweder in dem Innenraum des Fahrzeugs befindet oder dass sich der Schlüssel außerhalb des Fahrzeugs befindet. Auch hierdurch kann die Ortung der Schlüsseleinrichtung verbessert werden.

Gemäß einer weiteren Ausgestaltung werden die Innenraumortung und die Außenraumortung parallel durchgeführt. Wenn die Innenraumortung und die Außenraumortung parallel durchgeführt werden, können zeitliche Verzögerungen bei der Ortung der Schlüsseleinrichtung vermieden werden. Hierbei ist es insbesondere vorgesehen, dass das Steuergerät beziehungsweise die Recheneinrichtung einen Mehrkern-Prozessor aufweist. So kann beispielsweise ein Kern für die Außenraumortung genutzt werden und ein anderer Kern kann für die Innenraumortung genutzt werden. Mit den jeweiligen Prozessorkernen können dann unabhängig voneinander die Bewertungsverfahren beziehungsweise Bewertungsalgorithmen berechnet werden. Somit kann die Ortung der Schlüsseleinrichtung innerhalb einer kurzen Rechenzeit durchgeführt werden.

Gemäß einer weiteren Ausführungsform wird anhand einer Messung mit dem zumindest einen Außenraum-Transceiver und anhand von Referenzmessungen eine Umgebung des Fahrzeugs charakterisiert. Insbesondere ist es vorgesehen, dass für diese Messung mehrere Außenraum-Transceiver verwendet werden. Dabei können mit den jeweiligen Außenraum-Transceivern Signale ausgesendet werden und/oder die in der Umgebung des Fahrzeugs reflektierten Signale wieder empfangen werden. Zudem ist es insbesondere vorgesehen, dass die jeweils ausgesendeten Signale eine Information enthalten, welche beschreibt, von welchem Außenraum-Transceiver das Signal ausgesendet wurde. Somit kann beispielsweise ermittelt werden, ob die Signale in der Umgebung des Fahrzeugs reflektiert werden. Diese Messungen werden dabei alleine auf Grundlage der Außenraum-Transceiver durchgeführt und in diesem Fall wird die Schlüsseleinrichtung beziehungsweise die Position der Schlüsseleinrichtung nicht erfasst. Zudem können zuvor durchgeführte Referenz-Messungen genutzt werden, um die Umgebung des Fahrzeugs zu charakterisieren. Die Referenz-Messungen können beispielsweise bei Referenz-Umgebungssituationen durchgeführt werden. Solche Referenz-Umgebungssituationen können beispielsweise eine Garage, ein Parkhaus oder eine freie Fläche in der Umgebung des Fahrzeugs beschreiben. Durch einen Vergleich der Messungen mit den zuvor bestimmten Referenz-Messungen kann die Umgebung des Fahrzeugs charakterisiert werden. Diese Charakterisierung der Umgebung kann dazu genutzt werden, die Messergebnisse entsprechend zu bewerten. Zudem kann die Charakterisierung dazu genutzt werden, entweder nur die Ergebnisse der Außenraumortung oder nur die Ergebnisse der Innenraumortung zu nutzen. Die Ergebnisse der Charakterisierung der Umgebung können bei der Auswertung beziehungsweise den Bewertungsalgorithmen und auch bei der zuvor beschriebenen Plausibilisierung einbezogen werden.

Ein erfindungsgemäßes Schließsystem für ein Fahrzeug umfasst ein Steuergerät, zumindest einen Innenraum-Transceiver, zumindest einen Außenraum-Transceiver und eine Schlüsseleinrichtung. Das Schließsystem ist zum Durchführen eines erfindungsgemäßen Verfahrens und der vorteilhaften Ausgestaltungen davon ausgelegt. Insbesondere ist es vorgesehen, dass das Schließsystem eine Mehrzahl von Innenraum-Transceivern und eine Mehrzahl von Außenraum-Transceivern aufweist.

Ein erfindungsgemäßes Fahrzeug umfasst ein erfindungsgemäßes Schließsystem. Das Fahrzeug kann insbesondere als Personenkraftwagen ausgebildet sein. Es kann auch vorgesehen sein, dass das Fahrzeug als Nutzfahrzeug ausgebildet ist.

Ein Computerprogrammprodukt umfasst Befehle, die bei der Ausführung des Programms durch ein Steuergerät dieses veranlassen, das erfindungsgemäße Verfahren sowie die vorteilhaften Ausgestaltungen davon auszuführen. Ein computerlesbares Speichermedium umfasst Befehle, die bei der Ausführung durch ein Steuergerät dieses veranlassen, das erfindungsgemäße Verfahren sowie die vorteilhaften Ausgestaltungen davon auszuführen.

Die mit Bezug auf das erfindungsgemäße Verfahren vorgestellten bevorzugten Ausführungsformen und deren Vorteile gelten entsprechend für das erfindungsgemäße Schließsystem, für das erfindungsgemäße Fahrzeug, für das Computerprogrammprodukt sowie für das computerlesbare Speichermedium.

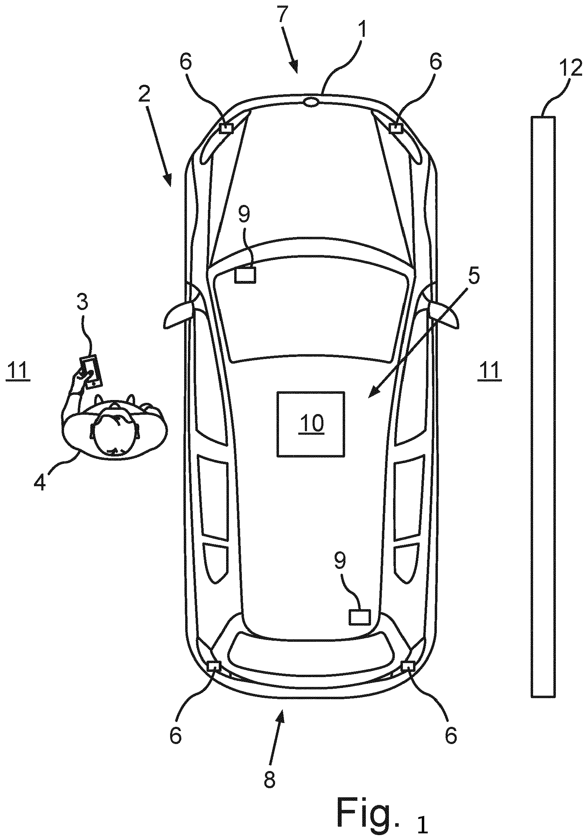

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Die Erfindung wird nun anhand eines bevorzugten Ausführungsbeispiels sowie unter Bezugnahme unter Bezugnahme auf die beigefügte Zeichnung näher erläutert. Dabei zeigt die einzige Fig. eine schematische Darstellung eines Fahrzeugs, welches ein Schließsystem aufweist.

Die einzige Fig. zeigt ein Fahrzeug 1 in einer Draufsicht, das Fahrzeug 1 ist vorliegend als Personenkraftwagen ausgebildet. Dieses Fahrzeug 1 umfasst ein Schließsystem 2. Das Schließsystem 2 dient dazu, das Fahrzeug 1 zu verriegeln und zu entriegeln. Darüber hinaus dient das Schließsystem 2 dazu, einen Antriebsmotor des Fahrzeugs 1 zu starten und gegebenenfalls diesen zu stoppen. Das Schließsystem 2 umfasst eine Schlüsseleinrichtung 3, die von einem Nutzer 4 beziehungsweise Fahrer des Fahrzeugs 1 getragen werden kann. Diese Schlüsseleinrichtung 3 kann als Funkschlüssel ausgebildet sein. In dem vorliegenden Ausführungsbeispiel ist die Schlüsseleinrichtung 3 als mobiles Gerät beziehungsweise als Smartphone ausgebildet. Mit der Schlüsseleinrichtung 3 werden entsprechende Bedienelemente bereitgestellt, welche von dem Nutzer 4 betätigt werden können. Somit kann beispielsweise ein Befehl an das Schließsystem 2 zum Verriegeln und/oder Entriegeln des Fahrzeugs 1 übertragen werden. Es kann auch vorgesehen sein, dass mittels der Schlüsseleinrichtung 3 ein Befehl zum Freigeben des Starts des Antriebsmotors beziehungsweise zum Deaktivieren der Wegfahrsperre ausgegeben werden kann. Alternativ dazu kann ein entsprechendes Bedienelement in einem Innenraum 5 des Fahrzeugs 1 vorgesehen sein.

Es ist ferner vorgesehen, dass eine aktuelle Position der Schlüsseleinrichtung 3 beziehungsweise eine relative Lage zwischen der Schlüsseleinrichtung 3 und dem Fahrzeug 1 fortlaufend bestimmt wird. Zu diesem Zweck umfasst das Schließsystem 2 zumindest einen Außenraum-Transceiver 6. In dem vorliegenden Ausführungsbeispiel umfasst das Schließsystem 2 vier Außenraum-Transceiver 6, wobei die Außenraum-Transceiver 6 außerhalb des Innenraums 5 des Fahrzeugs 1 angeordnet sind. In dem vorliegenden Ausführungsbeispiel sind zwei Außenraum-Transceiver 6 in einem Frontbereich 7 und zwei Außenraum-Transceiver 6 in einem Heckbereich 8 des Fahrzeugs 1 angeordnet. Dabei sind die Außenraum-Transceiver 6 an jeweiligen äußeren Ecken des Fahrzeugs 1 an oder hinter den Stoßfängern angeordnet. Darüber hinaus umfasst das Schließsystem 2 zumindest einen Innenraum-Transceiver 9. In dem vorliegenden Ausführungsbeispiel umfasst das Schließsystem 2 zwei Innenraum-Transceiver 9, welche in dem Innenraum 5 des Fahrzeugs angeordnet sind. Die jeweiligen Transceiver 6, 9 sind zur drahtlosen Datenübertragung mit der Schlüsseleinrichtung 3 verbunden. Dies bedeutet, dass zwischen den jeweiligen Transceivern 6, 9 und der Schlüsseleinrichtung 3 Funksignale ausgetauscht werden können. Anhand der Laufzeit der jeweiligen Funksignale kann dann der Abstand zwischen den jeweiligen Transceivern 6, 9 und der Schlüsseleinrichtung 3 bestimmt werden.

Auf Grundlage der jeweiligen Abstände kann dann die relative Lage zwischen der Schlüsseleinrichtung 3 und dem Fahrzeug 1 beziehungsweise einem Bezugspunkt des Fahrzeugs 1 ermittelt werden. Die Ermittlung der relativen Lage zwischen der Schlüsseleinrichtung 3 und dem Fahrzeug 1 kann mittels eines Steuergeräts 10 des Fahrzeugs 1 durchgeführt werden. Die Transceiver 6, 9 sind mit dem Steuergerät 10 zur Datenübertragung verbunden. Entsprechende Datenleitungen oder ein Datenbus sind vorliegend der Übersichtlichkeit halber nicht dargestellt. Mit dem Steuergerät 10 können entsprechende Steuerbefehle ausgesendet werden, um die Türen des Fahrzeugs 1 zu verriegeln oder zu entriegeln. Zudem können Steuerbefehle ausgesendet werden, um den Antriebsmotor zu starten beziehungsweise den Start freizugeben. Wie bereits erläutert, können durch eine entsprechende Bedieneingabe des Nutzers 4 Betriebsfunktionen des Schließsystems 2 angefordert werden. Diese Betriebsfunktionen können das Verriegeln des Fahrzeugs 1, das Entriegeln des Fahrzeugs 1, das Starten des Antriebsmotors und/oder das Stoppen des Antriebsmotors sein. Mittels des Schließsystems 2 beziehungsweise des Steuergeräts 10 kann nun in Abhängigkeit von der aktuellen Position der Schlüsseleinrichtung 3 entschieden werden, ob diese Betriebsfunktion durchgeführt wird. Beispielsweise wird das Verriegeln des Fahrzeugs 1 nur durchgeführt, wenn sich die Schlüsseleinrichtung 3 außerhalb des Innenraums 5 des Fahrzeugs 1 befindet. Das Starten des Antriebsmotors wird nur durchgeführt, wenn sich die Schlüsseleinrichtung 3 in dem Innenraum 5 des Fahrzeugs 1 befindet.

Mithilfe des Steuergeräts 10 wird ein entsprechender Bewertungsalgorithmus auf Grundlage der jeweils bestimmten Laufzeiten beziehungsweise Abstände durchgeführt. Mit diesem Bewertungsalgorithmus kann dann ermittelt werden, ob sich die Schließeinrichtung 3 in dem Innenraum 5 oder außerhalb des Innenraums 5 befindet. Gemäß dem Stand der Technik ist es vorgesehen, dass hierzu die Ergebnisse aller Transceiver 6, 9 verwendet werden. Falls sich in einer Umgebung 11 des Fahrzeugs 1 reflektierende Objekte befinden, kann dies zu Messfehlern führen. In dem vorliegenden Ausführungsbeispiel ist schematisch eine Wand 12 dargestellt, welche sich in der Umgebung 11 des Fahrzeugs 1 befindet. An dieser Wand 12 können beispielsweise die Signale der Außenraum-Transceiver 6 reflektiert werden, sodass das Messergebnis verfälscht wird. Somit kann nicht zuverlässig bestimmt werden, ob sich die Schlüsseleinrichtung 3 in dem Innenraum 5 oder außerhalb des Fahrzeugs 1 befindet.

Um die Ortung der Schlüsseleinrichtung 3 zu verbessern, ist es vorgesehen, dass eine Innenraumortung und eine Außenraumortung separat durchgeführt werden. Bei der Innenraumortung werden nur die Laufzeitmessungen der Innenraum-Transceiver 9 verwendet. Bei der Außenraumortung werden nur die Messergebnisse beziehungsweise Laufzeitmessungen der Außenraum-Transceiver 6 verwendet. Dabei ist es ferner vorgesehen, dass in Abhängigkeit von der angeforderten Betriebsfunktion entschieden wird, ob die Ergebnisse der Innenraumortung und/oder der Außenraumortung für die Bestimmung der Position der Schlüsseleinrichtung 3 herangezogen werden. Zudem können in Abhängigkeit von der Betriebsfunktion ein oder mehrere Bewertungsalgorithmen zum Auswerten der Laufzeitmessungen ausgewählt werden.

Wenn beispielsweise als Betriebsbefehl das Verriegeln des Fahrzeugs 1 angefordert wird, werden nur die Ergebnisse der Innenraumortung verwendet. Hierbei kann mit den Innenraum-Transceivern 9 auf zuverlässige Weise erfasst werden, ob sich die Schlüsseleinrichtung 3 in dem Innenraum 5 befindet. In diesem Fall werden die Ergebnisse der Außenraum-Transceiver 6, welche durch reflektierende Objekte beeinflusst sein können, nicht berücksichtigt. Somit kann beispielsweise auf zuverlässige Weise ausgeschlossen werden, dass sich die Schlüsseleinrichtung 3 in dem Innenraum 5 befindet. Wenn dies sichergestellt werden kann, kann das Verriegeln des Fahrzeugs 1 durchgeführt werden. Wenn die Position der Schlüsseleinrichtung 3 außerhalb des Fahrzeugs 1 erfasst werden soll, können beispielsweise nur die Ergebnisse der Außenraumortung genutzt werden.

Wenn als Betriebsfunktion das Starten des Antriebsmotors beziehungsweise die Freigabe für den Motorstart angefordert wird, können zunächst Ergebnisse der Innenraumortung genutzt werden, um zu überprüfen, ob sich die Schlüsseleinrichtung 3 in dem Innenraum 5 des Fahrzeugs 1 befindet. Parallel dazu kann eine Überprüfung auf Grundlage der Außenortung durchgeführt werden. Hierbei kann überprüft werden, ob sich die Schlüsseleinrichtung 3 nicht außerhalb des Fahrzeugs 1 befindet. Erst dann kann das Starten des Antriebsmotors durchgeführt werden. Es kann auch vorgesehen sein, dass bei Anforderung des Motorstarts sowohl die Messungen der Innenraum-Transceiver 9 als auch die Messungen der Außenraum-Transceiver verwendet werden.

Zudem kann es vorgesehen sein, dass die Ergebnisse der Innenraumortung und/oder der Außenraumortung entsprechend plausibilisiert werden. Hierzu können die bekannten Einbaupositionen beziehungsweise die Abstände der jeweiligen Transceiver 6, 9 untereinander berücksichtigt werden. Zudem können Verfahren der Triangulation genutzt werden, um die Messergebnisse zu plausibilisieren. Zudem kann es vorgesehen sein, dass die aktuelle Position der Schlüsseleinrichtung fortlaufend bestimmt wird und die Position gespeichert wird. Somit kann eine Historie der Position der Schlüsseleinrichtung verfolgt werden und das Bewertungsverfahren von Innenortung zu Außenortung oder von Außenortung zu Innenortung gewechselt werden, wenn die Schlüsseleinrichtung 3 das Fahrzeug 1 verlässt beziehungsweise von außen in das Fahrzeug 1 bewegt wird. In einem Übergangsbereich zwischen dem Innenraum 5 und der Umgebung 11 können sowohl die Innenraumortung als auch die Außenraumortung genutzt werden.

Insgesamt können somit die negativen Einflüsse der reflektierenden Signale eliminiert werden und die Ortung der Schlüsseleinrichtung 3 kann zuverlässiger durchgeführt werden.

### Bezugszeichenliste

- 1: Fahrzeug
- 2: Schließsystem
- 3: Schlüsseleinrichtung
- 4: Nutzer
- 5: Innenraum
- 6: Außenraum-Transceiver
- 7: Frontbereich
- 8: Heckbereich
- 9: Innenraum-Transceiver
- 10: Steuergerät
- 11: Umgebung
- 12: Wand

## Patentansprüche

1. Verfahren zum Betreiben einer Schließsystems (2) eines Fahrzeugs (1), bei welchem mit zumindest einem Innenraum-Transceiver (9), welcher in einem Innenraum (5) des Fahrzeugs (1) angeordnet ist, und mit zumindest einem Außenraum-Transceiver (6), welcher außerhalb des Innenraums (5) angeordnet ist, jeweils Laufzeitmessungen durchgeführt werden, anhand der Laufzeitmessungen eine relative Lage einer Schlüsseleinrichtung (3) zu dem Fahrzeug (1) bestimmt wird und eine Betriebsfunktion des Schließsystems (2) in Abhängigkeit von der bestimmten relativen Lage der Schlüsseleinrichtung (3) zu dem Fahrzeug (1) durchgeführt wird, wobei die Betriebsfunktion ein Verriegeln des Fahrzeugs (1), ein Entriegeln des Fahrzeugs (1) und/oder ein Starten eines Antriebsmotors des Fahrzeugs (1) ist,
wobei eine Innenraumortung, bei welcher die relative Lage der Schlüsseleinrichtung (3) zu dem Fahrzeug (1) nur anhand der Laufzeitmessung mit dem zumindest einen Innenraum-Transceiver (9) bestimmt wird, und eine Außenraumortung, bei welcher die relative Lage nur anhand der Laufzeitmessung mit dem zumindest einen Außenraum-Transceiver (6) bestimmt wird, separat durchgeführt werden,
**dadurch gekennzeichnet, dass**
die während der Innenraumortung und/oder der Außenraumortung bestimmte relative Lage in Abhängigkeit von der angeforderten Betriebsfunktion ausgewählt wird, wobei die während der Innenraumortung durchgeführten Laufzeitmessungen und/oder die während der Außenraumortung durchgeführten Laufzeitmessungen plausibilisiert werden, wobei bei der Plausibilisierung unter Heranziehen der bekannten Einbaupositionen der Transceiver überprüft wird, ob während der Laufzeitmessung ein Signal des zumindest einen Innenraum-Transceivers (9) und/oder des zumindest einen Außenraumraum-Transceivers (6) reflektiert wurde,
indem überprüft wird, ob nicht plausibel lange Signallaufzeiten aufgetreten sind.

2. Verfahren nach Anspruch 1,
**dadurch gekennzeichnet, dass**
falls die Betriebsfunktion das Verriegeln des Fahrzeugs (1) ist, das Verriegeln nur in Abhängigkeit von der während der Innenraumortung bestimmten relativen Lage durchgeführt wird.

3. Verfahren nach Anspruch 1 oder 2,
**dadurch gekennzeichnet, dass**
falls die Betriebsfunktion das Entriegeln des Fahrzeugs (1) ist, das Entriegeln nur in Abhängigkeit von der während der Außenraumortung bestimmten relativen Lage durchgeführt wird.

4. Verfahren nach einem der vorhergehenden Ansprüche,
**dadurch gekennzeichnet, dass**
falls die Betriebsfunktion das Starten des Antriebsmotors des Fahrzeugs (1) ist, die während der Innenraumortung bestimmte relative Lage anhand der während der Außenraumortung bestimmten relativen Lage überprüft wird.

5. Verfahren nach einem der vorhergehenden Ansprüche,
**dadurch gekennzeichnet, dass**
in Abhängigkeit von der Betriebsfunktion eine Priorisierung der während der Innenraumortung und/oder der Außenraumortung bestimmten relativen Lage durchgeführt wird.

6. Verfahren nach einem der vorhergehenden Ansprüche,
**dadurch gekennzeichnet, dass**
die Innenraumortung und die Außenraumortung fortlaufend durchgeführt werden und die jeweils hierbei bestimmte relative Lage gespeichert wird.

7. Verfahren nach einem der vorhergehenden Ansprüche,
**dadurch gekennzeichnet, dass**
Innenraumortung und die Außenraumortung parallel durchgeführt werden.

8. Verfahren nach einem der vorhergehenden Ansprüche,
**dadurch gekennzeichnet, dass**
anhand einer Messung mit dem zumindest einen Außenraum-Transceiver (6) und anhand von Referenz-Messungen eine Umgebung (11) des Fahrzeugs (1) charakterisiert wird.

9. Schließsystem (2) für ein Fahrzeug (1), umfassend einem Steuergerät (10), zumindest einen Innenraum-Transceiver (9), zumindest einen Außenraum-Transceiver (6) und eine Schlüsseleinrichtung (3), wobei das Schließsystem (2) zum Durchführen eines Verfahrens nach einem der vorhergehenden Ansprüche ausgelegt ist.

10. Fahrzeug (1) mit einem Schließsystem (2) nach Anspruch 9.

## Claims

1. Method for operating a locking system (2) of a vehicle (1), in which time-of-flight measurements are carried out in each case with at least one interior transceiver (9) which is arranged in an interior (5) of the vehicle (1), and with at least one exterior transceiver (6) which is arranged outside the interior (5), a position of a key device (3) relative to the vehicle (1) is determined on the basis of the time-of-flight measurements, and an operating function of the locking system (2) is performed depending on the determined position of the key device (3) relative to the vehicle (1), wherein the operating function is a locking of the vehicle (1), an unlocking of the vehicle (1) and/or a starting of a drive motor of the vehicle (1),
wherein an interior locating operation in which the position of the key device (3) relative to the vehicle (1) is determined only on the basis of the time-of-flight measurement with the at least one interior transceiver (9) and an exterior locating operation in which the relative position is determined only on the basis of the time-of-flight measurement with the at least one exterior transceiver (6) are carried out separately,
**characterized in that**
the relative position determined during the interior locating operation and/or the exterior locating operation is selected depending on the requested operating function, wherein the time-of-flight measurements carried out during the interior locating operation and/or the time-of-flight measurements carried out during the exterior locating operation are validated, wherein a verification is carried out during the validation using the known installation positions of the transceivers to determine whether a signal from the at least one interior transceiver (9) and/or the at least one exterior transceiver (6) has been reflected during the time-of-flight measurement by verifying whether implausibly long signal times-of-flight have occurred.

2. Method according to Claim 1,
**characterized in that**,
if the operating function is the locking of the vehicle (1), the locking is carried out only depending on the relative position determined during the interior locating operation.

3. Method according to Claim 1 or 2,
**characterized in that**,
if the operating function is the unlocking of the vehicle (1), the unlocking is carried out only depending on the relative position determined during the exterior locating operation.

4. Method according to one of the preceding claims, **characterized in that**,
if the operating function is the starting of the drive motor of the vehicle (1), the relative position determined during the interior locating operation is verified by means of the relative position determined during the exterior locating operation.

5. Method according to one of the preceding claims, **characterized in that**
a prioritization of the relative position determined during the interior locating operation and/or the exterior locating operation is carried out depending on the operating function.

6. Method according to one of the preceding claims, **characterized in that**
the interior locating operation and the exterior locating operation are carried out continuously and the relative position respectively determined herein is stored.

7. Method according to one of the preceding claims, **characterized in that**
the interior locating operation and the exterior locating operation are carried out in parallel.

8. Method according to one of the preceding claims, **characterized in that**
a surrounding area (11) of the vehicle (1) is characterized on the basis of a measurement with the at least one exterior transceiver (6) and on the basis of reference measurements.

9. Locking system (2) for a vehicle (1), comprising a control unit (10), at least one interior transceiver (9), at least one exterior transceiver (6) and a key device (3), wherein the locking system (2) is designed to carry out a method according to one of the preceding claims.

10. Vehicle (1) having a locking system (2) according to Claim 9.

## Revendications

1. Procédé permettant de faire fonctionner un système de fermeture (2) d'un véhicule (1), dans lequel des mesures de temps de transit sont effectuées respectivement par au moins un émetteur/récepteur d'habitacle (9) qui est disposé dans un habitacle (5) du véhicule (1) et par au moins un émetteur/récepteur d'espace extérieur (6) qui est disposé à l'extérieur de l'habitacle (5), une position relative d'un dispositif de clé (3) par rapport au véhicule (1) est déterminée à l'aide des mesures de temps de transit, et une fonction opérationnelle du système de fermeture (2) est exécutée en fonction de la position relative déterminée du dispositif de clé (3) par rapport au véhicule (1), dans lequel la fonction opérationnelle est un verrouillage du véhicule (1), un déverrouillage du véhicule (1) et/ou un démarrage d'un moteur d'entraînement du véhicule (1),
dans lequel une localisation dans l'habitacle, dans laquelle la position relative du dispositif de clé (3) par rapport au véhicule (1) est déterminée uniquement à l'aide de la mesure de temps de transit par ledit au moins un émetteur/récepteur d'habitacle (9), et une localisation dans l'espace extérieur, dans laquelle la position relative est déterminée uniquement à l'aide de la mesure de temps de transit par ledit au moins un émetteur/récepteur d'espace extérieur (6) est déterminée, sont effectuées séparément,
**caractérisé en ce que** la position relative déterminée pendant la localisation dans l'habitacle et/ou la localisation dans l'espace extérieur est sélectionnée en fonction de la fonction opérationnelle demandée, dans lequel la vraisemblance des mesures de temps de transit effectuées pendant la localisation dans l'habitacle et/ou des mesures de temps de transit effectuées pendant la localisation dans l'espace extérieur est contrôlée, dans lequel on vérifie lors du contrôle de vraisemblance en faisant appel aux positions d'installation connues des émetteurs/récepteurs si pendant la mesure de temps de transit un signal dudit au moins un émetteur/récepteur d'habitacle (9) et/ou dudit au moins un émetteur/récepteur d'espace extérieur (6) a été réfléchi en vérifiant si des temps de transit de signal d'une durée invraisemblable sont survenus.

2. Procédé selon la revendication 1, **caractérisé en ce que**, si la fonction opérationnelle est le verrouillage du véhicule (1), le verrouillage n'est effectué qu'en fonction de la position relative déterminée pendant la localisation dans l'habitacle.

3. Procédé selon la revendication 1 ou 2, **caractérisé en ce que**, si la fonction opérationnelle est le déverrouillage du véhicule (1), le déverrouillage n'est effectué qu'en fonction de la position relative déterminée pendant la localisation dans l'espace extérieur.

4. Procédé selon l'une quelconque des revendications précédentes, **caractérisé en ce que**, si la fonction opérationnelle est le démarrage du moteur d'entraînement du véhicule (1), la position relative déterminée pendant la localisation dans l'habitacle est vérifiée à l'aide de la position relative déterminée pendant la localisation dans l'espace extérieur.

5. Procédé selon l'une quelconque des revendications précédentes, **caractérisé en ce qu'**en fonction de la fonction opérationnelle, une priorisation de la position relative déterminée pendant la localisation dans l'habitacle et/ou la localisation dans l'espace extérieur est effectuée.

6. Procédé selon l'une quelconque des revendications précédentes, **caractérisé en ce que** la localisation dans l'habitacle et la localisation dans l'espace extérieur sont effectuées en continu, et la position relative respectivement déterminée à cet occasion est sauvegardée.

7. Procédé selon l'une quelconque des revendications précédentes, **caractérisé en ce que** la localisation dans l'habitacle et la localisation dans l'espace extérieur sont effectuées en parallèle.

8. Procédé selon l'une quelconque des revendications précédentes, **caractérisé en ce qu'**un environnement (11) du véhicule (1) est caractérisé à l'aide d'une mesure par ledit au moins un émetteur/récepteur d'espace extérieur (6) et à l'aide de mesures de référence.

9. Système de fermeture (2) pour un véhicule (1), comprenant un appareil de commande (10), au moins un émetteur/récepteur d'habitacle (9), au moins un émetteur/récepteur d'espace extérieur (6), et un dispositif de clé (3), le système de fermeture (2) étant conçu pour exécuter un procédé selon l'une quelconque des revendications précédentes.

10. Véhicule (1) comprenant un système de fermeture (2) selon la revendication 9.
